# EUROPEAN PATENT APPLICATION

(11) **EP 1 734 660 A1**
(43) Date of publication of application: **20.12.2006**
(21) Application number: 05012929.5
(22) Date of filing: 15.06.2005
(51) Int. Cl.: H04B 1/713, H04B 7/005

(54) **Transmission power control in a system using frequency hopping**

(71) Applicant: MATSUSHITA ELECTRIC INDUSTRIAL CO., LTD., Kadoma-shi, Osaka 571-8501 (JP)
(72) Inventor: Cooper, David, Newbury (GB)
(74) Representative: Grünecker, Kinkeldey, Stockmair & Schwanhäusser Anwaltssozietät

(57) **Abstract**

A method is described for transmission power control in a mobile communication system employing frequency hopping. Upon detecting that a mobile station is stationary unfavourable transmission frequencies within the hopping sequence, having a reception quality lower by a predetermined margin than average, are determined. For these frequencies, transmission power is reduced.

## Description

### BACKGROUND OF THE INVENTION

### 1. Field of the invention

The present invention is related to mobile communication, and in particular to transmission power control in systems employing frequency hopping.

### 2. Description of the Related Art

The principle of slow frequency hopping in radio communications is well known and is used in a variety of radio systems including GSM. It overcomes one of the weaknesses of narrowband radio communications, the so called frequency selective fading effect. This is caused by reflected radio waves interfering either constructively or destructively with each other and with a directly propagating wave. The effect is determined both by the frequency of the radio transmission and by the position of the receiver. If the receiver is positioned where the radio waves at a given frequency interfere destructively, then only a weak and noisy signal will be received at that given frequency and the transmission will be prone to errors. To overcome this, many narrowband radio systems use the technique of slow frequency hopping in which the transmissions are divided into short 'bursts', where each burst is transmitted at a given frequency, and the transmission frequency is changed between bursts.

The GSM specification 3GPP TS 45.001, rel. 7.0.0, p. 16, states the following:

*The principle of slow frequency hopping is that every mobile transmits its time slots according to a sequence of frequencies that it derives from an algorithm. The frequency hopping occurs between time slots and, therefore, a mobile station transmits (or receives) on a fixed frequency during one time slot (≈ 577 µs) and then must hop before the time slot on the next TDMA frame. [...] The frequency hopping sequences are orthogonal inside one cell (i.e. no collisions occur between communications of the same cell), and independent from one cell to [another].*

It is well known that the extent of signal fading at a given frequency is a function of the spatial position of the mobile terminal. At any position in space, specific transmission frequencies are likely to be adversely affected by fading due to "destructive" interference between radio paths; yet other frequencies may be enhanced by fading. In addition, certain frequencies may be adversely affected by interfering transmissions. To overcome this, the well known technique of 'frequency hopping' combined with 'time interleaving' is used, in which redundancy is added to the data comprising every message, and this redundant data is spread over several slots transmitted at different frequencies in the 'hopping sequence', so that on average enough data gets through correctly for the message to be reconstructed.

For a fast moving mobile, the set of favourable or 'good' frequencies and the set of unfavourable or 'bad' frequencies due to fading changes rapidly, and essentially randomly, with time, and the best strategy is to use as many hopping frequencies as is practical, and transmit on all the frequencies with the same transmission power and time duration.

When a mobile terminal is stationary, the set of 'good' and 'bad' frequencies due to fading effects is likely to change only slowly or not at all with time (although interference effects are typically time varying). This may lead to two undesirable effects. First, if the terminal is stationary at a position in space where more than an average number of frequencies are 'bad', the received signal quality may be degraded. Second, the energy spent transmitting data on 'bad' frequencies is wasted while continuing to generate interference elsewhere, for example in adjoining GSM cells.

In the past, attempts have been made to optimize frequency hopping systems in the presence of interference or frequency selective fading. However, in most cases it is suggested to adjust the list of hopping frequencies in some way so as to avoid and exclude the affected frequencies from the list. For example, EP 0884858 teaches a method in which the set of frequencies in the list is adjusted and improved so as to exclude the bad frequencies and include new good frequencies.

Unfortunately this approach or related approaches are not suitable for GSM or other systems that use fixed orthogonal frequency hopping lists, since the hopping lists themselves cannot be conveniently modified; if frequencies were added to or excluded from such a list, it would cease to be orthogonal to the lists used by other mobiles in the same cell and mutual interference would result between mobiles in the cell with very unfavourable consequences.

GB 2 350 750 "Predicting interference in a cellular communications system", teaches a method of suppressing transmission on specific frequencies on an orthogonal hopping sequence, without modifying the sequence itself. Frequencies to be suppressed are selected based on expected interference from other base stations. For this purpose, information from adjoining cells about their frequency allocation hopping patterns is required. A pattern matching algorithm is performed which records bursts that have bad interference, and matches them to a likely interference source in a neighbouring cell. In this way it is tried to predict 'clashes' between frequencies used by the cell itself and frequencies used by neighbour cells, by predicting when the different hopping patterns used in the neighbour cell will coincide.

When a hopping pattern of the current cell is expected to clash with the hopping pattern of the neighbour cell (i.e. both will transmit at the same frequency simultaneously), the base station "squelches" the transmission, In principle, such information can be also signalled to, and used by, the mobile which could squelch transmissions.

However, GB 2 350 750 requires information from neighbouring base stations and does not take fading into account. Furthermore it relies on the assumption that the interference pattern at the mobile will be the same as that at the base station, which will in most cases not be fulfilled. The mobile and the base station are at different positions, possibly miles apart; the receiver at the base station may be affected by interference from *mobiles* in the other cell, while the receiver at the mobile is affected by *base stations.* It is quite possible for the current base station to be subject to interference from a mobile which is in a cell to (say) its East, while the mobile itself is miles to its West and is only affected by interference from a cell to its West.

Therefore a method is desired to avoid transmission on frequencies affected by persistent fading (and/or interference). At the same time, the frequency hopping sequence itself cannot be changed since the frequency hopping sequences of different mobiles must remain orthogonal.

### SUMMARY OF THE INVENTION

Therefore it is the object of the present invention to improve the efficiency of mobile transmission systems employing frequency hopping in the presence of fading.

The present invention provides methods and systems in which it is detected whether a mobile station is temporarily stationary. Stationary means in this context that the mobile station does not leave a confined area within which propagation properties do not change significantly. If so, unfavourable ('bad') frequencies within the hopping sequence are determined in a data receiver by judging the reception quality on the different frequencies and by determining for which frequency the reception quality is below average by a predetermined margin. For these frequencies the transmission power is reduced at the transmitter.

The stationarity of the mobile station may be detected at the mobile station or at a correspondent base station. Furthermore the reception quality may be judged in the mobile station or in the base station, and transmission power is controlled in the respective other entity.

The present proposal is a considerable simplification and improvement over prior art, since it takes into account the fact that a *specific fixed set frequencies suffer from fading,* that is, the fading profile as a function of frequency is fixed when the mobile is stationary at a fixed position relative to the base station. The application of this law removes the need for information to be known and exchanged about neighbour cell hopping frequencies. The effort to detect that the mobile is stationary, and to find the set of faded frequencies, is lower than for performing a pattern matching algorithm to correlate against neighbour cell hopping sequences. Furthermore signalling overhead between different cells is reduced. Once the 'stationary' condition is detected, it is sufficient for the receiver end to notify the transmitter end of the set of faded frequencies. This *fixed* set of frequencies can be signalled between the mobile station and the base station. Further advantages of the present invention are improved link quality for same transmitted power, reduced interference for same link quality, and reduced power consumption in the mobile station.

### BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein
Figure 1 illustrates steps of the described method;
Figure 2 depicts tasks of mobile station and base station, and information exchange between the entities;
Figure 3 shows an exemplary schematic circuit of a mobile station which can be utilized to implement the present invention; and
Figure 4 shows an exemplary schematic of a base station.

### DETAILED DESCRIPTION OF THE INVENTION

The illustrative embodiments of the present invention will be described with reference to the figure drawings, wherein like elements and structures are indicated by like reference numbers. In the following, the present invention is explained for the illustrative example of a GSM system. However, it will be understood by a skilled person that it can likewise be applied to any other mobile communication system employing frequency hopping and transmission power control.

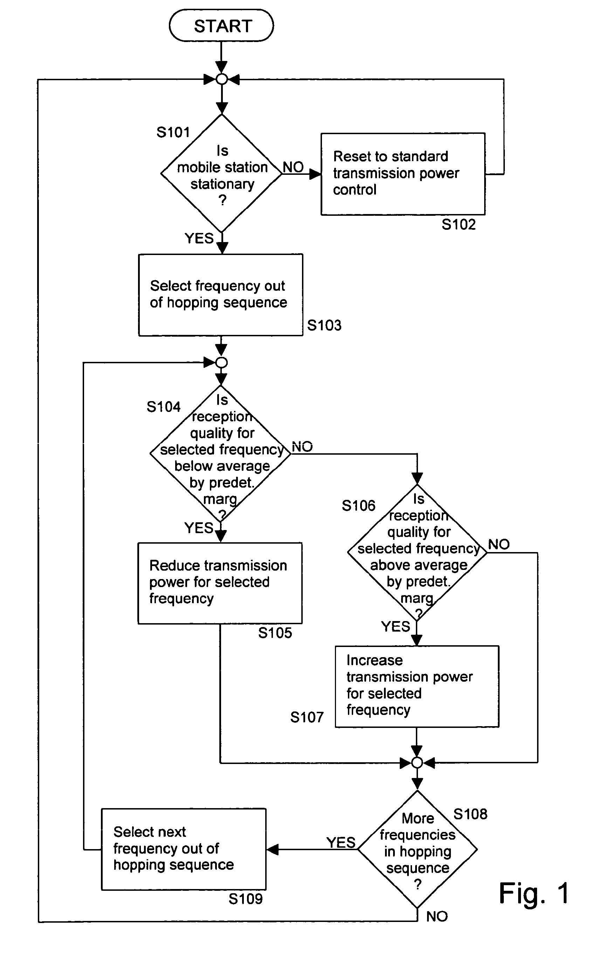

Fig.1 is a general overview over the steps of the described method from a system point of view. Details about tasks and signalling in different embodiments follow further below.

In S101 it is determined whether the mobile station, which is assumed to have an air interface connection to a particular base station, is stationary. The following methods to determine this are examples which can be used separately or in combination:
(1) Received power is tracked in one of the entities on each of the hopping frequencies over the last few cycles of the hopping sequence. If this power does not change over time, then this indicates that the mobile is stationary. Advantageously a threshold may be set for the change of power over time. If the change does not exceed the threshold, the mobile station is assumed to be stationary.
(2) The mobile can record the channel impulse response determined from a known training sequence for use by the equalizer from burst to burst. If this does not change over many bursts, this indicates that the mobile is stationary. Like with change of received power, a threshold may be also defined for changes of the channel impulse response.
(3) If the mobile station is equipped with a receiver for a positioning system (e.g. GPS, Galileo) which provides sufficient accuracy, this may also be utilized to determine whether the mobile station is stationary.

It will be understood that the definition of "stationary" should be read as "sufficiently stationary for the purposes of this method"; it is not excluded that the mobile may move very slowly or by slight amounts (typically much smaller than a wavelength) and still be regarded as stationary for an extended period of time. This means that the mobile station does not leave a confined area which is usually determined by propagation circumstances.

If it is determined in S101 that the mobile is not stationary (i.e. has left the confined area), the power control method is reset to the known transmission power control method in which there is usually no difference between the transmission power at different frequencies of the hopping sequence. If it is determined that the mobile station is stationary, a loop over several or all of the frequencies is started with S103 by choosing one out of these frequencies in step S103.

In S104 it is then checked whether the reception quality for this selected frequency is below average by a certain margin. If so, the transmission power for this frequency is reduced or even completely eliminated in the corresponding transmitter in S105. If not, it may optionally be checked in a step S106 whether the reception quality is above the average by a certain margin. In this case the transmission power may be increased for this frequency in S107.

Reception quality may be measured in terms of received signal strength, signal to noise ratio, physical bit error rates or by other known metrics.

In all cases it is next checked in S108 whether more frequencies are in the hopping sequence. If so, a next frequency is selected in S109 for checking the reception quality, and steps S104 to S108 are repeated, respectively. If all frequencies have been checked, the procedure may be terminated or return to S101.

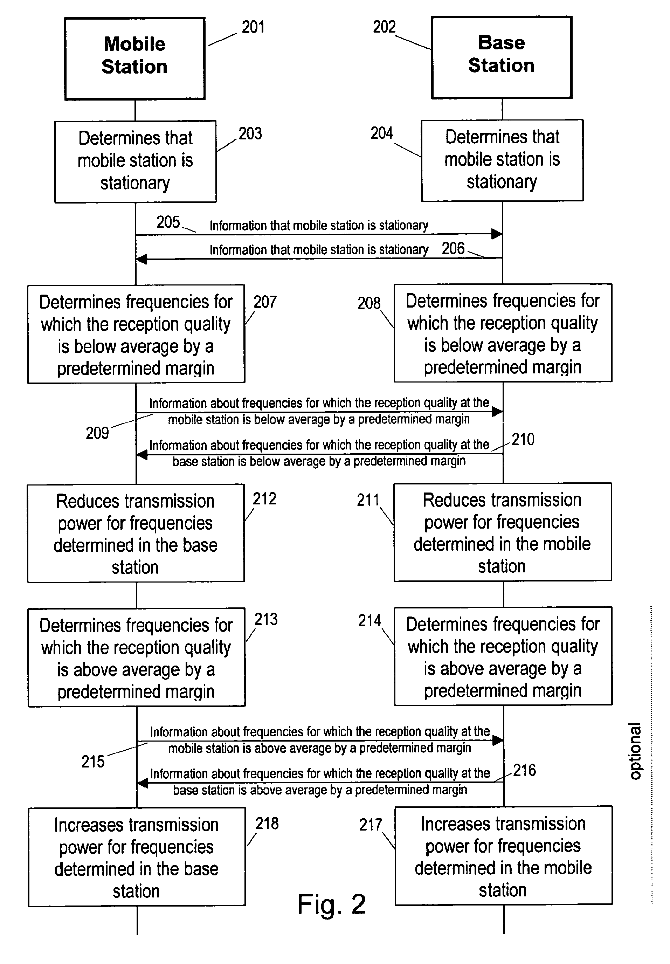

Fig. 2 illustrates the tasks of mobile station 201 and base station 202 and the information exchange according to the described method.

One of both entities, or both, determine in 203 and/or 204 that the mobile station 201 is stationary. If only one entity does this, it informs the respective other one in 205 or 206.

Then, at least one entity (usually both) determines in 207 and/or 208 at its receiver frequencies for which the reception quality is below average by a predetermined margin, and sends information about these frequencies to the respective other entity in 209 and/or 210. The respective other entity uses this information to reduce or completely eliminate the transmission power for these frequencies in its transmitter.

The described signalling 205, 206, 209 and 210 could use any appropriate control channel such as the FACCH or SACCH uplink channels.

In one option, a message 209, 210 contains information elements which indicate a set of frequencies where transmission should be completely attenuated (i.e. "squelched").

First, the respective other entity will suppress the transmission on the slots allocated to the indicated 'bad' frequencies, thus effectively 'puncturing' the frequency hopped transmission. Note that the 'bad' frequencies are not removed from the hopping sequence; they still remain in the hopping sequence, and there is no change to the format of transmitted data, but when the tum comes to transmit on such a 'bad' frequency the base station "squelches" the transmission; in other words, it transmits at zero power on a 'bad' frequency.

The respective other entity continues to transmit exactly the same data as it normally would have on the remaining 'good' slots, relying on redundancy to overcome the effect of the suppressed transmissions.

A further aspect of this invention is motivated by theoretical considerations that indicate that there are better methods than crudely "squelching" transmissions on frequencies with poor noise spectral density. Indeed, considering the case of a hopping sequence which contains two frequencies, *F*₁, and *F*₂, with equal noise conditions and assuming that data is ideally interleaved between all bursts, the best strategy is to allocate power equally between them. If *F*₁ had lower noise than *F*₂, then a better solution would be to favour *F*₁ by allocating slightly more power to burst at frequency *F*₁ and slightly less power to *F*₂ (in fact, theory shows that the power difference between *F*₁ and *F*₂ should increase with the difference in noise level). In the extreme case, where noise conditions at *F*₁ is vastly better than *F*₂, then *F*₂ should be transmitted with relatively tiny amount of power and almost all power allocated to *F*₁. This argument generalizes for many frequencies: ideally, the power allocated to each frequency is inversely related to the noise level or interference at that frequency.

If such a method of variable power control is applied, then the *average* amount of power to achieve a given quality of service would be reduced compared to the power required by transmitting using equal power on all frequencies; intuitively less power would be "wasted" on bad frequencies. Although there would be a power boost on good frequencies, this would be more than made up for by the power reduction on the bad frequencies. Provided there is a population of mobiles acting in this manner, the statistical effect would be that average inter-cell interference can be reduced, while maintaining the same quality of service. This creates a 'virtuous circle' since other cells will respond by reducing their average power, and the entire network benefits.

In practice power control is quantized (in the GSM system to steps of 2dB) and subject to upper and lower limits so this kind of fine control may not be practical; also, interleaving is not ideal. Therefore the available improvement will be less than the theoretical gain. Although it may be advantageous to attempt to control the power levels in fine steps, in practice this imposes an additional signalling overhead. Therefore the following methods are proposed in accordance with this invention:
- a message is sent from the mobile station to the base station (or vice versa) with information elements which indicate a set of frequencies where transmission should be completely attenuated (i.e. "squelched").
- a message is sent from the mobile station to the base station (or vice versa) with information elements which indicate a set of frequencies that may be subject to attenuation, and a set of frequencies that may subject to amplification, compared with the average power level
- a message is sent from the mobile station to the base station (or vice versa) with information elements to indicate a quantized set of attenuation or amplification levels and with information elements indicating the set of frequencies to which they should be applied.

As another option it may be chosen to increase the power of the transmissions on all or a selected subset of the remaining slots. As an example, the sending entity might suppress transmission on 1/4 of the slots, while increasing transmission power averaged over the remaining slots by 4/3, thus ensuring that total average transmission power is unaffected, but the power is focussed on those slots with the most favourable performance.

The receiving entity may detect in 213, 214 particularly 'good' frequencies which exceed the average reception quality by a predetermined margin, and send this information to the respective other entity in 215 and/or 216. The respective other entity may then selectively increase the transmission power on these frequencies in 217,218.

When the receiving entity detects that the selected frequencies are no longer consistently good, perhaps because the mobile station has started moving again, it signals this to the sending entity which can start transmitting on all frequencies in the hopping sequence again.

Note that the application of burst power control requires signalling of the appropriate frequencies and quantized power control values as described above. However, if the mobile starts to move (i.e. leaves the confined area in which propagation properties are unchanged), the burst power control mode can be terminated independently by either end (i.e. by either the base station or the mobile station) without requiring signalling, since both the mobile and base station can detect, by using the methods described above, that the mobile is no longer stationary. Furthermore reception is fully compatible. The receiver does not require information about the applied power control algorithm.

This method is proposed in addition to or in conjunction with the method where one or both ends signal to each other that the mobile is no longer stationary, that is, a message is sent from the mobile station to the base station (or vice versa) with information elements to indicate that the mobile is not stationary and the set of frequencies to attenuate or amplify is no longer valid.

In the case of sufficiently slow moving mobiles, although not quite stationary, a further improvement is possible.

If the mobile is moving sufficiently slowly, then the amplitude at each hopping frequency will change only gradually. In this case, and provided the movement of the mobile is sufficiently slow, there will be available sufficient signalling bandwidth between the mobile and the base station that the list of frequencies to attenuate or amplify can be updated sufficiently quickly to track changes in the fading conditions.
Specifically, provided the mobile is moving sufficiently slowly that signalling bandwidth allows it, then when needed a message may be sent from the mobile station to the base station (or vice versa) to indicate additions, changes or deletions to the list of frequencies that should be attenuated or amplified.

The detection of this condition can use the same techniques as described above, for example tracking of the power received on each frequency with a threshold detector to determine when the rate of change of power exceeds some determined limit.

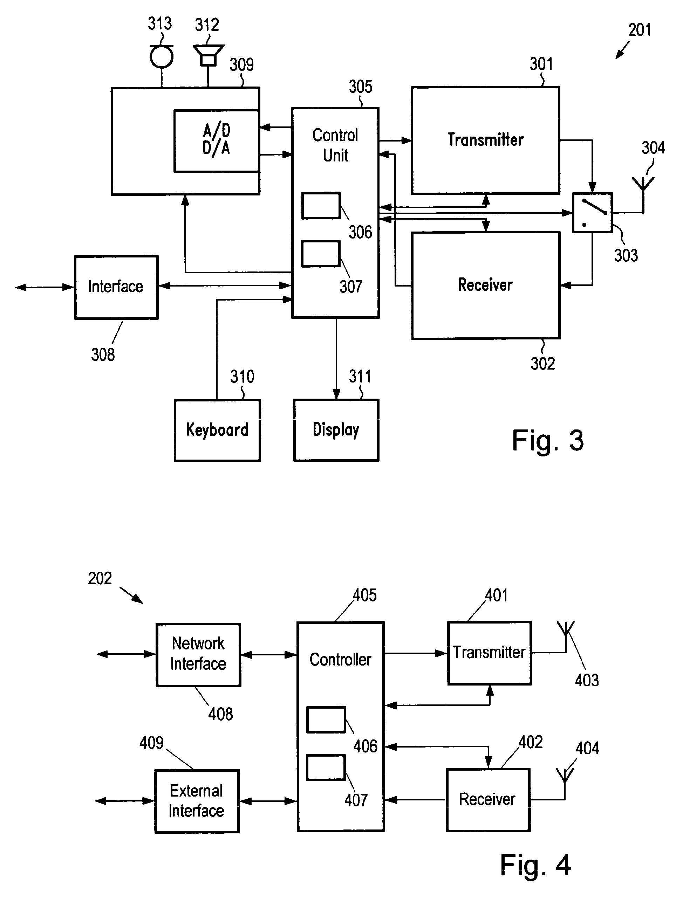

Fig. 3 shows a mobile station 201 in which steps of the described method could be carried out. It comprises a transmitter 301 and a receiver 302, a duplexer 303 and an antenna 304. It further comprises a control unit 305 with at least one processor 306 and memory 307 comprising random access memory and non-volatile memory like flash memory. Memory 307 stores instructions which cause processor 306 to carry out the described method steps. These instructions may be downloaded via an external interface 308 from other computer-readable media like magnetic tape, magnetic or optical disk or semiconductor memory cards.

Furthermore an apparatus for carrying out the present invention can be implemented in hardware logic or as a mixed software/hardware solution.

Mobile station 201 might be a mobile phone or a module to be integrated into a portable computer, PDA, vehicle or the like. A mobile phone may further comprise mixed signal unit 309 and a user interface comprising keyboard 310, display 311, speaker 312 and microphone 313.

Fig. 4 shows the structure of a base station 202 which can be adapted to carry out the present invention. It comprises a transmitter 401 and a receiver 402 with antennas 403 and 404, a network interface 408 and a controller 405 with processor 406 and memory 407. The memory comprises random access memory and non-volatile memory like magnetic hard disk or flash memory and stores instructions which cause processor 406 to carry out the described method steps. These instructions may be downloaded via an external interface 409 from other computer-readable media like magnetic tape, magnetic or optical disk or semiconductor memory cards.

## Claims

1. A method for transmission power control in a mobile communication system employing frequency hopping, the method comprising the steps of
a) detecting that a mobile station stays temporarily within a confined area (S101);
b) detecting at least one unfavourable transmission frequency in a hopping sequence, said unfavourable transmission frequencies having a reception quality which is lower than average by a predetermined margin (S104); and
c) in response to steps a) and b), reducing transmission power for transmission on said unfavourable frequencies (S105).

2. The method of claim 1, further comprising the steps of
d) detecting at least one favourable transmission frequency in a hopping sequence, said favourable transmission frequencies having a reception quality which is higher than average by a predetermined margin (S106); and
e) in response to steps a) and d), increasing transmission power for transmission on said favourable frequencies (S107).

3. The method of claim 2, wherein the average transmission power over one complete hopping sequence remains the same as before carrying out steps c) and e).

4. The method of claim 1, further comprising, after step c), the steps of
f) detecting that said mobile station has left said confined area (S101); and
g) in response to step f), reverting to normal power control (S102).

5. The method of one of the preceding claims, wherein step a) is carried out by tracking changes in received power on at least a part of the frequencies in the hopping sequence over a plurality of frequency hopping cycles, wherein it is decided that said mobile stays within a confined area if said changes in received power are below a predetermined threshold.

6. The method of one of the claims 1 to 4, wherein step a) is carried out by tracking changes in channel impulse response on at least a part of the frequencies in the hopping sequence over a plurality of frequency hopping cycles, wherein it is decided that said mobile stays within a confined area if said changes in channel impulse response are below a predetermined threshold.

7. The method of one of the preceding claims, wherein the mobile station carries out steps a) and b) and a base station carries out step c), and the method comprises sending messages (205, 209) from the mobile station to the base station, comprising information about the results of steps a) and b).

8. The method of one of the claims 1 to 6, wherein the mobile station carries out steps a) and c) and a base station carries out step b), and the method comprises sending a message (210) from the base station to the mobile station, comprising information about the results of step b).

9. The method of one of the claims 1 to 6, wherein the mobile station carries out step b) and a base station carries out steps a) and c), and the method comprises sending a message (209) from the mobile station to the base station, comprising information about the results of step b).

10. The method of one of the claims 1 to 6, wherein the mobile station carries out step c) and a base station carries out steps a) and b), and the method comprises sending messages (206, 210) from the base station to the mobile station, comprising information about the results of steps a) and b).

11. A mobile station (201) for a mobile communication system comprising
a transmitter (301) for sending information to a base station;
a receiver (302) for receiving information from a base station (202), using frequency hopping on a plurality of frequencies;
movement detection means for determining whether the mobile station stays temporarily within a confined area; and
quality determining means for determining a reception quality of signals received on at least a part of said plurality of frequencies;
wherein said mobile station is configured to send messages (205) to the base station, comprising information that said mobile station stays temporarily within a confined area and to send messages (209) to the base station, comprising information about unfavourable frequencies having a reception quality which is lower than average by a predetermined margin.

12. A mobile station (201) for a mobile communication system comprising
a transmitter (301) for sending information to a base station (202), using frequency hopping on a plurality of frequencies, being further configured to control the transmission power for said transmission;
a receiver (302) for receiving information from the base station; and
movement detection means for determining whether the mobile station stays temporarily within a confined area;
wherein said mobile station is configured to receive messages (210) from the base station, comprising information about unfavourable frequencies having a reception quality which is lower than average by a predetermined margin, and to reduce transmission power for transmission on said unfavourable frequencies if said movement detection means determines that the mobile station stays temporarily within a confined area.

13. The mobile station (201) according to claim 12, further configured to receive messages (216) from the base station, comprising information about favourable frequencies having a reception quality which is higher than average by a predetermined margin, and to increase transmission power for transmission on said favourable frequencies if said movement detection means determines that the mobile station stays temporarily within a confined area.

14. The mobile station (201) according to one of the claims 11 to 13, further comprising receiving power determining means for determining the power of a received signal, wherein said movement detection means is configured to track changes in received power on at least a part of the frequencies in a hopping sequence over a plurality of frequency hopping cycles, to compare said changes to a predetermined threshold, and to decide that said mobile stays within a confined area if said changes in received power are below the predetermined threshold.

15. The mobile station (201) according to one of the claims 11 to 13, further comprising channel estimation means for determining a channel impulse response from a received signal, and said movement detection means is configured to track changes in channel impulse response on at least a part of the frequencies in a hopping sequence over a plurality of frequency hopping cycles, to compare said changes to a predetermined threshold, and to decide that said mobile stays within a confined area if said changes in channel impulse response are below the predetermined threshold.

16. A computer-readable storage medium having stored thereon instructions which, when carried out on a processor (306) of a mobile station (201) using frequency hopping on a plurality of frequencies, cause the mobile station
to determine whether the mobile station stays temporarily within a confined area;
to determine a transmission quality of signals received from a base station (202) on at least a part of said plurality of frequencies;
to send messages (205) to the base station, comprising information that said mobile station stays temporarily within a confined area; and
to send messages (209) to the base station, comprising information about unfavourable frequencies having a reception quality which is lower than average by a predetermined margin.

17. A computer-readable storage medium having stored thereon instructions which, when carried out on a processor (306) of a mobile station (201) using frequency hopping on a plurality of frequencies, cause the mobile station
to determine whether the mobile station stays temporarily within a confined area;
to receive messages (210) from a base station, comprising information about unfavourable frequencies having a reception quality which is lower than average by a predetermined margin; and
to reduce transmission power for transmission on said unfavourable frequencies if it is determined that the mobile station stays temporarily within a confined area.

18. A base station (202) for a mobile communication system comprising
a transmitter (401) for sending information to a mobile station (201);
a receiver (402) for receiving information from the mobile station on a plurality of frequencies, using frequency hopping;
movement detection means for determining whether the mobile station stays temporarily within a confined area; and
quality determining means for determining a transmission quality of signals received on at least a part of said plurality of frequencies;
wherein said base station is configured to send messages (206) to the mobile station, comprising information that said mobile station stays temporarily within a confined area and to send messages (210) to the mobile station, comprising information about unfavourable frequencies having a reception quality which is lower than average by a predetermined margin.

19. A base station (202) for a mobile communication system comprising
a transmitter (401) for sending information to a mobile station (201) on a plurality of frequencies, using frequency hopping, the transmitter being further configured to control the transmission power for said transmission;
a receiver (402) for receiving information from the mobile station; and
movement detection means for determining whether the mobile station stays temporarily within a confined area;
wherein said base station is configured to receive messages (209) from the mobile station, comprising information about unfavourable frequencies having a reception quality which is lower than average by a predetermined margin, and to reduce transmission power for transmission on said unfavourable frequencies if said movement detection means determines that the mobile station stays temporarily within a confined area.

20. The base station (202) according to claim 19, further configured to receive messages (215) from the mobile station, comprising information about favourable frequencies having a reception quality which is higher than average by a predetermined margin, and to increase transmission power for transmission on said favourable frequencies if said movement detection means determines that the mobile station stays temporarily within a confined area.

21. The base station (202) according to one of the claims 18 to 20, further comprising receiving power determining means for determining the power of a received signal, and said movement detection means is configured to track changes in received power on at least a part of the frequencies in a hopping sequence over a plurality of frequency hopping cycles, to compare said changes to a predetermined threshold, and to decide that said mobile stays within a confined area if said changes in received power are below the predetermined threshold.

22. The base station (202) according to one of the claims 18 to 20, further comprising channel estimation means for determining a channel impulse response from a received signal, and said movement detection means is configured to track changes in channel impulse response on at least a part of the frequencies in a hopping sequence over a plurality of frequency hopping cycles, to compare said changes to a predetermined threshold, and to decide that said mobile stays within a confined area if said changes in channel impulse response are below the predetermined threshold.

23. A computer-readable storage medium having stored thereon instructions which, when carried out on a processor (406) of a base station (202) using frequency hopping on a plurality of frequencies, cause the base station
to determine whether a mobile station (201) stays temporarily within a confined area;
to determine a transmission quality of signals received from said mobile station on at least a part of said plurality of frequencies;
to send messages (206) to the mobile station, comprising information that said mobile station stays temporarily within a confined area; and
to send messages (210) to the mobile station, comprising information about unfavourable frequencies having a reception quality which is lower than average by a predetermined margin.

24. A computer-readable storage medium having stored thereon instructions which, when carried out on a processor (406) of a base station (202) using frequency hopping on a plurality of frequencies, cause the base station
to determine whether a mobile station (201) stays temporarily within a confined area;
to receive messages (209) from said mobile station, comprising information about unfavourable frequencies having a reception quality which is lower than average by a predetermined margin; and
to reduce transmission power for transmission on said unfavourable frequencies if it is determined that the mobile station stays temporarily within a confined area.
